# EUROPEAN PATENT APPLICATION

(11) **EP 2 362 105 A2**
(43) Date of publication of application: **31.08.2011**
(21) Application number: 11155296.4
(22) Date of filing: 22.02.2011
(51) Int. Cl.: F16B 12/10, F16B 13/02

(54) **Wooden plug**

(30) Priority: 22.02.2010 SE 1050167
(71) Applicant: SSC Trätrappor AB, 935 32 Norsjö (SE)
(72) Inventor: Stenman, Jan, 935 31, NORSJÖ (SE)
(74) Representative: Nikolopoulou, Sofia

(57) **Abstract**

The present invention concerns a wooden plug 1 intended to be used to conceal a depression 2 in an arrangement 3. The wooden plug 1 comprises a first part 1.1 that is arranged inside the depression 2 in order to retain the wooden plug 1 in and at the depression 2, and a second part 1.2 that covers the opening 2.1 of the depression. The first part 1.1 comprises a section 1.1a has a diameter Ø1 that is greater than that of the remainder of the body of the first part and that, when the wooden plug 1 is in its mounted condition, makes contact against the wall 2.2 of the depression.

## Description

### Technical area

The present invention concerns a wooden plug according to the introduction to claim 1.

### Background

The use of various types of wooden plug to conceal a depression in various types of arrangement is known. These wooden plugs normally comprise a part that covers the opening and a retaining part that is arranged in the depression. Since wood is a living material that both expands and contracts, depending on ambient humidity and temperature, the fastening of such a wooden plug in the depression in the arrangement is continuously being influenced.

The retaining part is normally glued into the depression such that the wooden plug can sit more firmly, but due to the changes in the dimensions of the wood, this gluing does not remain free of influence particularly long. And even if the dimensions of the wood are not influenced, the retaining ability of the glue becomes impaired with time, since the glue becomes less adhesive as it dries. A wooden plug that does not sit firmly may, in the worst case, fall out of the depression and disappear.

If such a wooden plug is glued in place, it becomes a problem if it is desired to remove the wooden plug during the period in which the glue is effective. It may be completely impossible to remove the wooden plug and it may be necessary to use physical violence on the wooden plug, which in the worst case can destroy the wooden plug and its function, and may destroy the surrounding construction.

### Description of the invention

One purpose of the present invention is to offer a wooden plug that sits in place without glue and that also can be demounted without damage, such that it can be reused.

This purpose is achieved with a wooden plug having the technical distinctive features that are made clear by the characterising part of claim 1.

### Brief description of drawings

**Figure 1** shows a wooden plug according to the invention.
**Figure 2** shows a wooden plug according to invention located in a depression, in its mounted condition, in its working condition.
**Figure 3** also shows a wooden plug according to invention in its working condition.

### Detailed description of embodiments

The present invention concerns a wooden plug 1 intended to be used to conceal a depression 2, a cavity, a hole, or similar in an arrangement 3. The wooden plug 1 comprises a first part 1.1 that is arranged inside the depression 2 in order to retain the wooden plug 1 in and at the depression 2, and a second part 1.2 that covers the opening 2.1 of the depression.

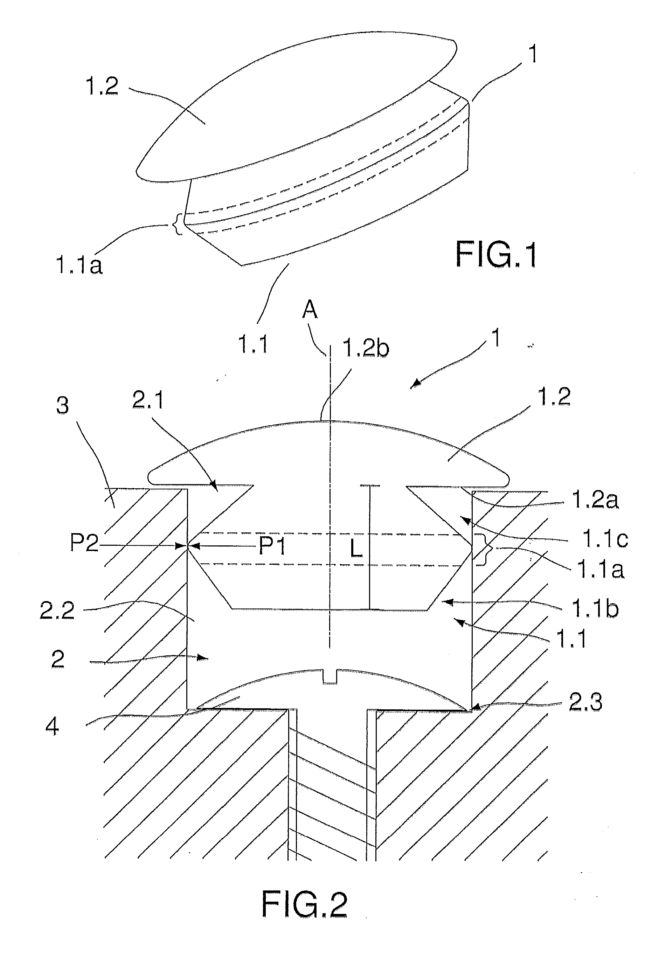

The first part 1.1 of the wooden plug comprises a section 1.1a that fully or partially extends along the length L of the first part, which section has a diameter Ø1 that is greater than that of the remainder of the body of the first part and that, when the wooden plug 1 is in its mounted condition, makes contact against the wall 2.2 of the depression. This part 1.1a constitutes a protruding convexity, a bulge, a thickening, a ridge that runs around the first part 1.1. The section 1.1a constitutes a broadening of the first part 1.1 of the wooden plug in a radial direction out from the centre line of the plug along its longitudinal direction A. See Figures 1 and 2.

Since the plug 1 is manufactured from wood, the nature of its construction means that it has some "give", and this makes it possible to introduce the wooden plug 1 into the depression 2. The section 1.1a will act against the wall 2.2 of the depression such that the wooden plug 1 is retained in the depression 2. The slightly compressed wood in the section 1.1a will strive to regain its original form, and this ensures a force P1 from the section 1.1 a of the wooden plug against the wall 2.2 of the depression, which results in a retaining force P2 in the direction from the wall 2.2 towards the wooden plug 1.

The retaining force P2 can be overcome by manual force from a person, such that it is possible to remove the wooden plug 1 from the depression 2. The removal takes place without damage to the wooden plug 1, which means that the wooden plug 1 can be used again in the same depression 2 or in another depression.

In order to ensure that the construction has the ability to give, the wooden plug 1 should be manufactured such that the completed plug has the fibres of the wood arranged in the longitudinal direction A of the wooden plug, it is manufactured such that the longitudinal direction A of the wooden plug follows the original longitudinal direction of the wood and the growth rings. Since the quality and hardness varies between growth rings, this will give rise to properties of give in the wooden plug 1 and, in particular, in the section 1.1 a.

The wooden plug 1 through its construction with the section 1.1a and the direction of fibres will obtain a greater degree of give in its contact with the wall 2.2 of the depression. Thus the wooden plug 1 will be easier to introduce and to place into and over the depression 2 while at the same time it will be retained in the depression 2 due to the force P2 that arises between the section 1.1 of the plug and the wall 2.2 of the depression, and it will remain in place in a firm and stable manner. The give present in the construction ensures also that the wooden plug 1 regains its original form when it is removed from the depression 2.

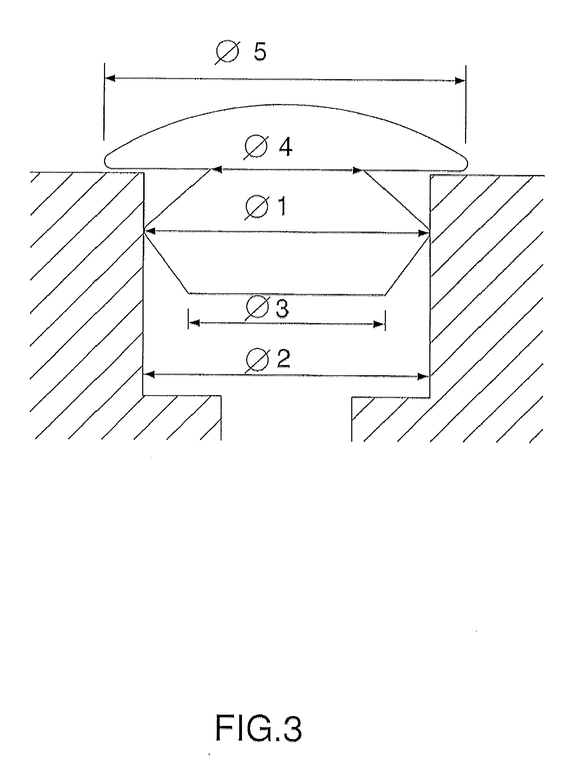

The first part 1.1 is cylindrical in order for it to be possible to arrange it in a depression 2 that is cylindrical. The section 1.1a has a diameter Ø1 that is greater than other diameters of the first part 1.1. The outer diameter Ø1 of the section is greater than the inner diameter Ø2 of the depression. Due to the fact that the wooden plug 1, the wood of the plug, has an ability to give, it will be possible to compress the wooden plug 1 somewhat in the section 1.1a such that the wooden plug can enter the depression 2. See Figure 3.

The first part 1.1 of the wooden plug 1 comprises a first free end 1.1 b that has a diameter Ø3 that is less than the diameter Ø1 of the section. The first part 1.1 comprises also a second end 1.1c that is united with the second part 1.2 and that has a diameter Ø4 that is less than the diameter Ø1 of the section.

The first part 1.1 and the second part 1.2 of the wooden plug 1 are manufactured from one piece, from a single piece of wood.

The section 1.1a of the wooden plug is, when the wooden plug is viewed along a longitudinal section, arced in a direction out from the wooden plug 1, in the longitudinal direction A of the wooden plug, against the wall 2.2 of the depression. The section 1.1a can be described also as "pointed", but the introduction of the wooden plug 1 will be easier and the retaining force P2 will obtain a better distribution if the section 1.1a is not pointed, but rather slightly rounded.

The second part 1.2 of the wooden plug has a diameter Ø5 that is greater than the diameter Ø2 of the depression 2 and it is appropriate that it be larger than the diameter Ø1 of the section. Mounting and demounting, handling, the wooden plug 1 is facilitated if the second part 1.2 has a size that makes it clear that this part is the part that is to be located outside of the depression 2 and that is, furthermore, available for gripping. The second part 1.2 comprises a first side 1.2a that faces towards the arrangement 3 and that makes contact, when the wooden plug 1 is in its mounted condition, with the arrangement 3 around the opening 2.1 of the depression. The second part 1.2 of the wooden plug 1 comprises also a second side 1.2b that faces away from the arrangement 3 and that is so formed that it merges together with the arrangement 3. It may be, for example, arched. The second side 1.2b may be also so formed that it protrudes from the arrangement 3 and is by virtue of its form visible relative to the arrangement 3.

A wooden plug 1 according to the present invention is intended to be used to conceal a depression 2 in an arrangement 3 where the arrangement 3 is of wood. The wooden plug 1 is intended to be used to conceal a fixing element 4, or similar, arranged at the bottom 2.3 of the depression 2. Since the retaining force P2 can be overcome by the manual force of a person, the wooden plug 1 can be removed from the depression 2 such that it becomes possible to access the fixing element 4 in order to remove it or exchange it. It will then be possible to replace the wooden plug 1. See Figure 2.

The descriptions of various technical characteristics that are given in this description are to be interpreted in a manner that is advantageous to the invention, and not as limitations of the innovative concept. Different technical characteristics can be combined in various ways without deviating from the innovative concept.

## Claims

1. A wooden plug (1) intended to be used to conceal a depression (2) in an arrangement (3) comprising a first part (1.1) that is arranged inside the depression (2) in order to retain the wooden plug (1) in and at the depression (2), and a second part (1.2) that covers the opening (2.1) of the depression, **characterised in that** the first part (1.1) comprises a section (1.1 a) that has a diameter (Ø1) that is greater than that of the remainder of the body of the first part and that, when the wooden plug (1) is in its mounted condition, makes contact with the wall (2.2) of the depression and where the section (1.1a) is arc-shaped in the direction outwards from the longitudinal direction (A) of the wooden plug, against the wall (2.2) of the depression.

2. The wooden plug (1) according to claim 1, where the fibres of the wood are arranged in the longitudinal direction (A) of the wooden plug.

3. The wooden plug (1) according to claim 1 or 2, where the first part (1.1) is cylindrical such that it is possible to arrange it in a depression (2) that is cylindrical.

4. The wooden plug (1) according to claim 3, where the section (1.1a) has a diameter (Ø1) that is greater than other diameters of the first part (1.1).

5. The wooden plug (1) according to claim 2 or 3, where the diameter (Ø1) of the section is greater than the diameter (Ø2) of the depression.

6. The wooden plug (1) according to any one of claims 1-5, where the first part (1.1) comprises a first free end (1.1 b) that has a diameter (Ø3) that is less than the diameter (Ø1) of the section.

7. The wooden plug (1) according to any one of claims 1-6, where the first part (1.1) comprises a second end (1.1c) that is united with the second part (1.2) and has a diameter (Ø4) that is less than the diameter (Ø1) of the section.

8. The wooden plug (1) according to any one of claims 1-7, where the second part (1.2) has a diameter (Ø5) that is greater than the diameter (Ø2) of the depression (2) and larger than the diameter (Ø1) of the section.

9. The wooden plug (1) according to any one of claims 1-8, where the second part (1.2) comprises a first side (1.2a) that faces towards the arrangement (3) and that makes contact, when the wooden plug (1) is in its mounted condition, with the arrangement (3) around the opening (2.1) of the depression.

10. The wooden plug (1) according to any one of claims 1-9, where the second part (1.2) comprises a second side (1.2b) that faces away from the arrangement (3).

11. The use of a wooden plug (1) according to any one of claims 1-10 to cover a depression (2) in an arrangement (3) where the arrangement (3) is of wood.

12. The use of a wooden plug (1) according to any one of claims 1-10 to conceal a fixing element (4), or similar, arranged at the bottom (2.3) of the depression (2).
